# FASCICULE DE BREVET EUROPEEN

(11) **EP 0 490 747 B1**
(45) Date de publication et mention de la délivrance du brevet: **18.01.1995**
(21) Numéro de dépôt: 91403323.8
(22) Date de dépôt: 09.12.1991
(51) Int. Cl.: F16F 13/00

(54) **Perfectionnements aux dispositifs antivibratoires hydrauliques**
Verbesserungen bei hydraulischen Antischwingungsvorrichtungen
Improvements to hydraulic vibration-absorbing devices

(30) Priorité: 12.12.1990 FR 9015565
(43) Date de publication de la demande: 17.06.1992
(73) Titulaire: HUTCHINSON, F-75384 Paris Cédex 08 (FR)
(72) Inventeur: Bretaudeau, Jean-Pierre, F-28200 Chateaudun (FR); Lenormand, Philippe, F-72610 Oisseau Le Petit (FR); Gregoire, Daniel, F-28200 Chateaudun (FR)
(74) Mandataire: Behaghel, Pierre

(56) Documents cités:
- EP-A- 0 271 894
- EP-A- 0 385 463
- FR-A- 2 555 272
- PATENT ABSTRACTS OF JAPAN vol. 10, no. 77 (M-464)(2134) 26 Mars 1986& JP-A-60 220 238 (KINUGAWA GOMU KOGYO KK) 2 Novembre 1985

## Description

L'invention est relative aux dispositifs antivibratoires hydrauliques destinés à être interposés aux fins d'amortissement et de liaison, voire de support, entre deux éléments rigides tels qu'un châssis de véhicule et que le moteur de ce véhicule.

Elle concerne plus particulièrement, parmi ces dispositifs, ceux qui comportent :
- une armature rigide annulaire d'axe X vertical ou sensiblement vertical et un plot rigide coaxial à cette armature, solidarisables respectivement avec les deux éléments rigides à réunir,
- une paroi annulaire en élastomère d'axe X résistant à la compression axiale, interposée entre l'armature et le plot,
- une membrane flexible et étanche portée par l'armature et délimitant une enceinte avec celle-ci, le plot et la paroi annulaire,
- une cloison intermédiaire comprenant au moins une portion annulaire rigide, portée par l'armature et divisant l'intérieur de l'enceinte en deux chambres, l'une de travail du côté de la paroi dit côté "inférieur" et l'autre de compensation,
- un passage étranglé faisant communiquer en permanence les deux chambres entre elles,
- et une masse de liquide remplissant les deux chambres et le passage étranglé.

Comme on le sait, avec un tel dispositif, l'application sur l'une des armatures, selon la direction X, d'oscillations de relativement grande amplitude (généralement supérieure à 0,5 mm) et de relativement basse fréquence (généralement de l'ordre de 5 à 20 Hz) a pour effet de refouler le liquide de l'une des deux chambres dans l'autre et inversement à travers le passage étranglé, avec mise en résonance de la masse liquide ainsi refoulée lorsque la fréquence desdites oscillations atteint une valeur prédéterminée qui est fonction du rapport entre la longueur axiale et la section droite du passage étranglé, cette mise en résonance assurant un excellent amortissement des oscillations concernées.

L'invention vise plus particulièrement encore, parmi les dispositifs antivibratoires du genre ci-dessus, ceux du type "suspendu" pour lesquels le plot constitue la tête d'une tige de suspension elle-même disposée coaxialement à l'armature annulaire, à l'intérieur de la portion inférieure de cette armature, la paroi annulaire, évasée vers le bas et de préférence tronconique, rentrant alors vers le haut à l'intérieur de la portion annulaire inférieure de la chambre de travail.

Les supports de ce type (voir par exemple la figure 2 du document EP-A-0 271 894) permettent de suspendre un ensemble rigide, tel qu'un moteur, disposé au-dessous d'eux et accroché à leurs tiges tout en faisant travailler à la compression leurs parois annulaires en élastomère.

Il est à noter que, lesdites parois annulaires étant déformables aussi bien radialement qu'axialement, les supports considérés peuvent transmettre des vibrations du plot à l'armature ou inversement, aussi bien selon des directions radiales que selon la direction de l'axe X.

En général les transmissions de vibrations que l'on désire contrôler -et donc l'amortissement que l'on recherche- concernent essentiellement la direction axiale.

Les oscillations ou vibrations transmises radialement sont négligeables et ne justifient pas un traitement particulier.

C'est notamment le cas si la fréquence de ces vibrations demeure inférieure à un seuil relativement bas, qui est par exemple de 165 Hz, valeur correspondant à une vitesse de rotation maximum de 5000 tours/minute pour l'arbre d'un moteur Diesel.

Si, toutes choses égales par ailleurs, le moteur considéré est remplacé par un moteur à essence dont la vitesse maximum de rotation passe à 7000 tours/minute, ce qui correspond à des vibrations dont la fréquence est de 230 Hz, il arrive que les composantes radiales de ces vibrations mettent en jeu des phénomènes de résonance qui sont insuffisamment filtrés et engendrent des bruits désagréables.

Il convient donc de prévoir des moyens spéciaux pour réduire le niveau de ces bruits.

C'est là le principal but de la présente invention.

Pour atteindre un tel but, un support antivibratoire hydraulique du genre en question selon l'invention est caractérisé en ce que la portion annulaire inférieure de sa chambre de travail est garnie au moins dans son fond d'au moins un obstacle lamellaire souple.

L'immersion d'un tel obstacle dans le liquide a pour objet et pour effet de freiner les déplacements circonférentiels et radiaux de celui-ci autour de l'axe du support ou même d'interdire partiellement ces déplacements, ce qui atténue fortement les résonances radiales indésirables.

Dans des modes de réalisation particuliers, on a recours en outre à l'une et/ou à l'autre des dispositions suivantes :
- l'obstacle lamellaire est composé d'une pluralité de lamelles parallèles s'étendant transversalement par rapport à l'axe vertical à partir de la face intérieure d'un bloc annulaire avec lequel elles forment une même bague cylindrique en élastomère dont le profil extérieur est complémentaire de celui de la portion annulaire inférieure, de la chambre de travail, qui le reçoit,
- l'obstacle lamellaire est constitué par une lèvre annulaire unique prolongeant intérieurement une bague cylindrique en élastomère,
- l'obstacle lamellaire est composé d'une pluralité de voiles minces s'étendant parallèlement à l'axe du support, notamment selon des plans radiaux de celui-ci, et venus de moulage avec la paroi annulaire,
- le plot est solidarisé avec un disque débordant radialement dans la chambre de travail et délimitant avec la portion, de l'armature annulaire qui l'entoure, un autre passage étranglé pour le liquide,
- dans un support antivibratoire hydraulique conforme aux deux alinéas précédents, la périphérie du disque est évidée radialement par des encoches chevauchant avec jeu les différentes lamelles radiales.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant aux dessins ci-annexés d'une manière bien entendu non limitative.

Les figures 1, 2, 3 et 5, de ces dessins, montrent respectivement en coupe axiale -la dernière, selon le plan V-V, figure 6- quatre modes de réalisation distincts de supports antivibratoires hydrauliques conformes à l'invention.

Les figures 4 et 6 sont respectivement des coupes transversales des figures 3 et 5 selon respectivement IV-IV, figure 3, et VI-VI, figure 5.

Dans chaque cas le dispositif antivibratoire comprend :
- une armature annulaire rigide 1 d'axe vertical X et une tige centrale coaxiale 2 à tête élargie 2₁ destinées à être fixées respectivement sur deux éléments rigides que l'on désire monter l'un sur l'autre avec amortissement de leurs oscillations mutuelles, éléments faisant partie par exemple, respectivement, d'un châssis de véhicule et d'un moteur à combustion interne compris par ce véhicule,
- une paroi tronconique en élastomère 3 interposée verticalement entre l'armature 1 et la tête 2₁,
- une membrane ou soufflet flexible et étanche 4 monté de façon étanche sur l'armature 1 de manière à former une enceinte avec elle, la paroi 3 et la tête 2₁,
- une cloison intermédiaire rigide 5 portée par l'armature 1 et divisant l'intérieur de l'enceinte ci-dessus en deux chambres, l'une A, "de travail", du côté de la paroi 3 et l'autre B, "de compensation",
- et un passage étranglé 6 évidé dans la cloison 5 et reliant en permanence les deux chambres A et B.

Un liquide d'amortissement L tel que de l'eau additionnée d'antigel remplit les chambres A et B ainsi que le passage 6.

L'armature annulaire 1 se présente ici sous la forme d'un manchon cylindrique dont l'extrémité supérieure constitue un capot ou couvercle de protection 7 pour la membrane et porte un goujon 8 en attente s'étendant vers le haut.

La base 1₁ de ce manchon présente une forme tronconique rétrécie vers le bas et est prolongée inférieurement par un rebord transversal rentrant évidé par un trou central 11, trou traversé avec jeu par la tige 2, mais trop petit pour livrer passage à la tête 2₁ de cette tige.

Cette mesure constitue une sécurité, la butée éventuelle de la tête 2₁ contre le bord du trou 11, après écrasement ou destruction de la paroi tronconique 3, rendant impossible l'extraction de la tige 2 vers le bas.

Cette paroi tronconique 3 -appelée "cône" dans ce qui suit- relie la face interne de la base tronconique 1₁ du manchon 1 à la face externe évasée vers le haut de la tête 2₁.

En d'autres termes, cette paroi 3 présente une forme rentrante à l'intérieur du support, convergeant vers le centre de celui-ci.

L'ensemble rentrant ou "nez" formé par le cône 3 et la tête 2₁ est alors entouré par la base annulaire de la chambre de travail A, base qui se présente sous la forme d'une auge annulaire 12.

Dans les modes de réalisation habituels, cette auge annulaire 12 est libre de tout obstacle et occupée exclusivement par le liquide L.

La liberté de circulation du volume de liquide L contenu dans ladite auge 12 autour du nez 3, 2₁ est donc totale et l'expérience montre que, dans certaines circonstances, ce volume peut être soumis, du fait des vibrations relatives radiales imposées à la tige 2, à des phénomènes de résonance générateurs de bruits désagréables.

Pour supprimer ces phénomènes ou tout au moins les limiter à un degré où ils ne sont plus gênants, on place dans l'auge annulaire 12 des obstacles susceptibles de freiner la circulation du liquide L.

Ces obstacles immergés dans le liquide L doivent être constitués et disposés de façon à remplir simultanément les conditions suivantes :
- ils doivent freiner les composantes radiales et circonférentielles de la circulation du liquide, mais ils ne doivent pas bloquer complètement cette circulation, notamment selon la direction axiale,
- ils ne doivent pas modifier sensiblement la rigidité radiale du cône élastique 3,
- ils doivent, comme le liquide, présenter un volume global constant.

Dans des modes de réalisation répondant à ces divers impératifs, les obstacles considérés comprennent au moins une lamelle en caoutchouc, c'est-à-dire un voile ou membrane déformable relativement mince dont les deux faces baignent dans le liquide.

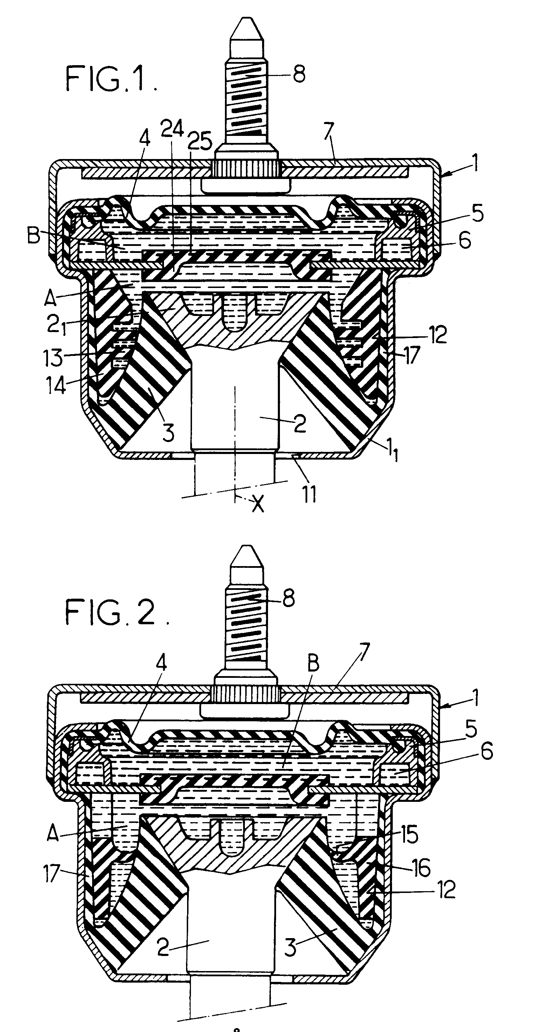

Dans un premier mode de réalisation illustré sur la figure 1, les obstacles ci-dessus sont constitués par une pluralité de lamelles 13 plates et transversales, c'est-à-dire s'étendant perpendiculairement à l'axe X et formant des sortes d'ailettes parallèles qui font saillie sur la face latérale intérieure d'une même bague cylindrique 14.

Le bloc aileté résultant 13,14 présente une forme extérieure globale sensiblement complémentaire de celle de l'auge 12 de façon à pouvoir y être logé d'une manière quasi-jointive.

Comme visible sur la figure 1, les bords circulaires intérieurs de certaines des ailettes 13 viennent alors en contact avec la face externe du cône 3, ce qui a pour effet de fermer certaines des gorges annulaires délimitées par deux ailettes ou lamelles voisines.

Pour que la totalité des cavités annulaires ainsi formées soient totalement pleines de liquide L, l'introduction du bloc aileté 13,14 dans l'auge 12 est effectuée sous immersion "en piscine" en ce sens que l'ensemble est alors immergé dans un bac rempli du liquide amortisseur L.

Le matériau élastique constitutif du bloc aileté 13,14 doit être assez mou pour que les déformations du cône 3, tant radiales qu'axiales, ne soient pas entravées.

Ce premier mode de réalisation présente l'avantage de réduire le volume du liquide L en déplacement et d'offrir une surface importante en contact avec ce liquide selon les directions radiales et circonférentielles correspondant aux déplacements les plus importants dudit liquide.

Mais le bloc aileté ne peut pas être fabriqué en une seule pièce par moulage : il faut procéder au moulage de deux moitiés et les assembler ensuite, ce qui constitue un inconvénient pour les fabrications en grande série.

Le second mode de réalisation illustré sur la figure 2 ne présente pas cet inconvénient.

Dans celui-ci, les ailettes ou lamelles multiples 13 ci-dessus sont remplacées par une lèvre transversale et annulaire unique 15 faisant saillie à l'intérieur d'une bague cylindrique 16 et le bord aminci de cette lèvre 15 vient en contact avec la surface extérieure du cône 3.

Ici encore, la bague 16 est introduite jointivement dans l'auge 12, la surface extérieure de cette bague étant sensiblement complémentaire de la surface intérieure correspondante de l'armature 1, laquelle surface est ici -comme dans le cas précédent d'ailleurs-tapissée par une couche de caoutchouc 17 venue de moulage avec le cône 3.

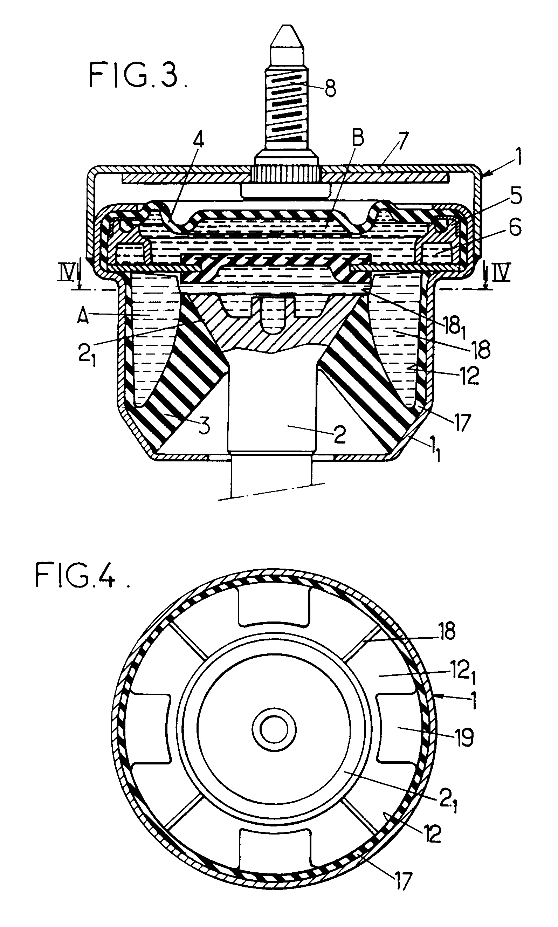

Dans le troisième mode de réalisation illustré sur les figures 3 et 4, les lamelles, désignées par la référence 18, ne sont plus disposées selon des plans perpendiculaires à l'axe X : elles s'étendent ici selon des plans radiaux passant par ledit axe.

Les lamelles 18 sont par exemple au nombre de 4, disposées selon des plans décalés angulairement les uns des autres de 90° autour de l'axe X.

L'auge 12 est ainsi compartimentée par les lamelles radiales 18 en augets 12₁ (figure 4).

Dans cette construction, la circulation radiale du liquide L est freinée par la présence des lamelles 18 et sa circulation circonférentielle est fortement limitée, mais l'effet de cette dernière circulation n'est pas totalement annulé, vu, d'une part, la forte déformabilité des lamelles 18 et, d'autre part, l'absence d'étanchéité de la liaison entre chaque lamelle et la cloison intermédiaire 5.

On peut même voir sur la figure 3 que chaque lamelle 18 déborde axialement par rapport au pied adjacent 2₁, mais ne se prolonge pas radialement au-dessus de ce pied, de sorte que le liquide peut également circuler le long du bord intérieur 18₁ de la portion axialement débordante de chaque lamelle 18.

Un avantage intéressant de cette construction réside en ce que les lamelles 18 peuvent venir de moulage directement avec le cône 3, ainsi qu'éventuellement des masselottes de remplissage 19 qui sont prévues dans la portion, du fond de l'auge 12, la plus éloignée dudit cône 3.

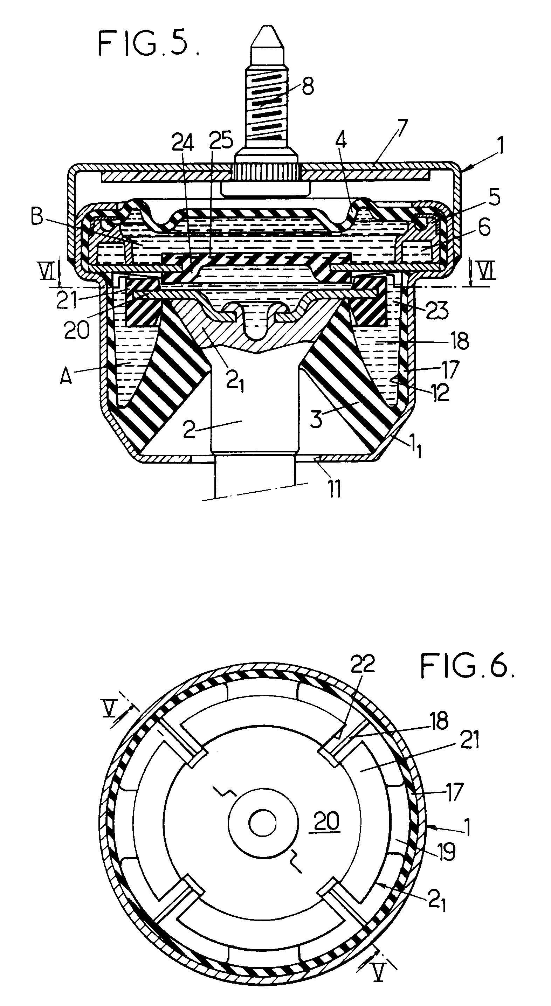

Le quatrième mode de réalisation illustré sur les figures 5 et 6 diffère simplement du précédent en ce qu'un disque 20 débordant transversalement à l'intérieur de la chambre de travail A a été ajouté sur la tête 2₁.

Le pourtour de ce disque est coiffé par un bourrelet de caoutchouc 21 de section sensiblement rectangulaire et l'ensemble ainsi coiffé est entaillé par des encoches radiales 22 propres à chevaucher avec jeu les lamelles 18.

Les portions subsistantes, en forme d'arcs de cercle, du bourrelet 21 définissent avec la portion, de la face interne de l'armature 1 tapissée par son revêtement 17, qui entoure ledit bourrelet, un passage annulaire étranglé 23 pour le liquide L.

Comme il est connu, la présence d'un tel passage 23 permet d'exploiter aux fins d'amortissement ou filtration un second "effet colonne" basé sur la résonance du liquide contenu dans ledit passage, effet du même type que le premier "effet colonne" basé sur l'existence du passage étranglé 6 : pour un dimensionnement approprié des cotes dudit passage 23, on peut centrer le second effet en question sur une seconde valeur de la fréquence des oscillations à filtrer ou amortir.

D'une façon également connue en soi, on prévoit dans chacun des modes de réalisation ci-dessus décrits, au centre de la cloison intermédiaire rigide 5, une ouverture qui est obturée par une membrane déformable 24 associée à des moyens, tels qu'une toile 25 noyée dans ladite membrane, propres à limiter l'amplitude de ses débattements.

Les vibrations de ladite membrane permettent de filtrer certaines vibrations, de fréquence relativement élevée et d'amplitude relativement faible, qui sont appliquées à la tige 2 par le moteur qui y est suspendu.

En suite de quoi, et quel que soit le mode de réalisation adopté, on dispose finalement d'un support antivibratoire hydraulique dont la constitution et le fonctionnement résultent suffisamment de qui précède.

Ce support présente un certains nombre d'avantage par rapport à ceux antérieurement connus, notamment en ce qui concerne la réduction des bruits engendrés par les vibrations radiales de relativement haute fréquence (notamment comprise entre 150 et 400 Hz) de la tige par réduction automatique de la raideur dynamique correspondante du support vis-à-vis desdites vibrations.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment:
- celles où les lamelles souples formant obstacle partiel à la circulation du liquide L autour du nez central et immergées dans ce liquide seraient encore minces et parallèles à l'axe X, mais inclinées sur les rayons correspondants à la façon des aubes d'une turbine,
- celles où les surfaces moyennes de ces lamelles seraient incurvées au lieu d'être planes,
- celles où lesdites lamelles seraient constituées par les parois de matériaux alvéolaires (mousses) à porosité ouverte,
- et celles où les lamelles en question seraient constituées par des sortes de copeaux en vrac liés aux parois de l'auge 12, notamment par collage.

## Revendications

1. Dispositif antivibratoire hydraulique destiné à être interposé aux fins d'amortissement et de liaison, voire de support, entre deux éléments rigides, comportant : une armature rigide annulaire (1) d'axe (X) vertical ou sensiblement vertical et un plot rigide coaxial à cette armature, solidarisables respectivement avec les deux éléments rigides à réunir ; une paroi annulaire en élastomère (3) résistant à la compression axiale, interposée entre l'armature et le plot ; une membrane flexible et étanche (4) portée par l'armature et délimitant une enceinte avec celle-ci, le plot et la paroi annulaire ; une cloison intermédiaire (5) comprenant au moins une portion annulaire rigide, portée par l'armature et divisant l'intérieur de l'enceinte en deux chambres, l'une de travail (A) du côté de la paroi, dit côté "inférieur", et l'autre de compensation (B) ; un passage étranglé (6) faisant communiquer en permanence les deux chambres entre elles ; et une masse de liquide (L) remplissant les deux chambres et le passage étranglé, et pour lequel dispositif en outre le plot constitue la tête (2₁) d'une tige de suspension (2) elle-même disposée coaxialement à l'armature annulaire (1), à l'intérieur de la portion inférieure de cette armature, la paroi annulaire (3), évasée vers le bas et de préférence tronconique, rentrant alors vers le haut à l'intérieur de la portion annulaire inférieure (12) de la chambre de travail, caractérisé en ce que cette portion annulaire inférieure (12) de la chambre de travail (A) est garnie au moins dans son fond d'au moins un obstacle lamellaire souple (13,14,18).

2. Dispositif antivibratoire hydraulique selon la revendication 1, caractérisé en ce que l'obstacle lamellaire est composé d'une pluralité de lamelles parallèles (13) s'étendant transversalement par rapport à l'axe vertical (X) à partir de la face intérieure d'un bloc annulaire avec lequel elles forment une même bague cylindrique en élastomère (14) dont le profil extérieur est complémentaire de celui de la portion annulaire inférieure (12), de la chambre de travail, qui le reçoit.

3. Dispositif antivibratoire hydraulique selon la revendication 1, caractérisé en ce que l'obstacle lamellaire est constitué par une lèvre annulaire unique (15) prolongeant intérieurement une bague cylindrique en élastomère (16).

4. Dispositif antivibratoire hydraulique selon la revendication 1, caractérisé en ce que l'obstacle lamellaire est composé d'une pluralité de voiles minces (18) s'étendant parallèlement à l'axe du support et venus de moulage avec la paroi annulaire (3).

5. Dispositif antivibratoire hydraulique selon la revendication 4, caractérisé en ce que les voiles minces s'étendent selon des plans radiaux du support.

6. Dispositif antivibratoire hydraulique selon l'une quelconque des précédentes revendications, caractérisé en ce que le plot (21) est solidarisé avec un disque (20,21) débordant radialement dans la chambre de travail (A) et délimitant avec la portion, de l'armature annulaire (1) qui l'entoure, un autre passage étranglé (23) pour le liquide.

7. Dispositif antivibratoire hydraulique selon l'une quelconque des revendications 4 et 5 et selon la revendication 6, caractérisé en ce que la périphérie du disque (20,21) est évidé radialement par des encoches (22) chevauchant avec jeu les différentes lamelles (18).

## Patentansprüche

1. Hydraulische Antischwingungsvorrichtung, die zum Zwecke der Dämpfung und Verbindung und sogar der Abstützung zwischen zwei starren Elementen einbaubar ist und aus folgenden Teilen besteht: einer starren, ringförmigen Armatur (1) mit der Achse (X), die senkrecht oder im wesentlichen senkrecht verläuft und einem koaxial zu dieser Armatur angeordneten starren Fußstück, die an dem einen bzw. dem anderen der beiden miteinander zu verbindenden starren Elemente anbringbar sind, einer ringförmigen Wandung (3) aus elastomerem Material, die widerstandsfähig gegen axiale Druckbelastung ist und zwischen der Armatur und dem Fußstück angeordnet ist, einer flexiblen und dichten Membran (4), die durch die Armatur gehalten wird und mit dieser, dem Fußstück und der ringförmigen Wandung einen Raum begrenzt, einer Zwischenwand (5), mit wenigstens einem starren, ringförmigen Abschnitt, der von der Armatur gehalten wird und das Innere des Raumes in zwei Kammern, eine Arbeitskammer (A) auf der "untere Seite" genannten Seite der Wandung und eine Kompensationskammer (B) unterteilt, einem verengtem Durchgang (6), der die beiden Kammern dauernd miteinander verbindet und einer flüssigen Masse (L), die die beiden Kammern und den verengten Durchgang ausfüllt, wobei bei dieser Vorrichtung darüber hinaus das Fußstück den Kopf (2₁) einer Aufhängungsstange (2) bildet, die ihrerseits koaxial zu der ringförmigen Armatur (1) im Inneren des unteren Abschnittes dieser Armatur angeordnet ist und die ringförmige Wandung (3), die sich nach unten vorzugsweise konisch erweitert und dann im Inneren des ringförmigen, unteren Abschnittes (12) der Arbeitskammer nach oben eingezogen ist, dadurch gekennzeichnet, daß dieser untere ringförmige Abschnitt (12) der Arbeitskammer (A) wenigstens an seinem Boden mit wenigstens einem nachgiebigen lamellaren Hindernis (13, 14, 18) versehen ist.

2. Antischwingungsvorrichtung nach Anspruch 1, dadurch gekennzeichnet, daß das lamellare Hindernis aus einer Vielzahl von parallelen Lamellen (13) besteht, die sich bezogen auf die senkrechte Achse (X) in Querrichtung ausgehend von der inneren Oberfläche eines ringförmigen Blockes erstrecken, mit dem zusammen sie einen zylindrischen Ring (14) aus elastomerem Material bilden, dessen äußeres Profil dem des ringförmigen unteren Abschnittes (12) der Arbeitskammer entspricht, die ihn aufnimmt.

3. Antischwingungsvorrichtung nach Anspruch 1, dadurch gekennzeichnet, daß das lamellare Hindernis aus einer einzigen ringförmigen Lippe (15) besteht, die innen einen zylindrischen Ring (16) aus elastomerem Material verlängert.

4. Antischwingungsvorrichtung nach Anspruch 1, dadurch gekennzeichnet, daß das lamellare Hindernis aus einer Vielzahl von dünnen Lamellen (18) besteht, die sich parallel zur Achse der Abstützung erstrecken und aus einem Stück mit der ringförmigen Wandung (3) geformt sind.

5. Antischwingungsvorrichtung nach Anspruch 4, dadurch gekennzeichnet, daß die dünnen Lamellen sich längs radialer Ebenen der Abstützung erstrecken.

6. Antischwingungsvorrichtung nach einem der vorhergehenden Ansprüche, dadurch gekennzeichnet, daß das Fußstück (2₁) mit einer Scheibe (20, 21) befestigt ist, die radial in die Arbeitskammer (A) hineinragt und mit dem Abschnitt der ringförmigen Armatur (1), die sie umgibt, einen anderen verengten Durchgang (23) für die Flüssigkeit begrenzt.

7. Antischwingungsvorrichtung nach einem der vorhergehenden Ansprüche 4 und 5 und gemäß Anspruch 6, dadurch gekennzeichnet, daß die Scheibe (20, 21) an ihrem Umfang mit radialen Einschnitten (22) versehen ist, die mit Spiel die verschiedenen Lamellen (18) übergreifen.

## Claims

1. Hydraulic anti-vibration device for disposing between two rigid elements for the purposes of damping and connection, or even support, the device comprising: a rigid endpiece (1) annular about a vertical or substantially vertical axis (X) and a rigid stud coaxial with said endpiece, the endpiece and the stud being suitable for securing to respective ones of said two rigid elements to be connected together; an annular wall (3) made of elastomer that withstands axial compression and that is interposed between the endpiece and the stud; a flexible and waterlight membrane (4) carried by the endpiece and cooperating with the endpiece, the stud, and the annular wall to delimit an enclosure; an intermediate partition (5) comprising at least an annular rigid portion, which partition is carried by the endpiece and divides the inside of the enclosure into two chambers, a "working" chamber (A) adjacent to the wall, and a "compensation" chamber (B); a throttled passage (6) putting the two chambers permanently into communication with each other; and a mass of liquid (L) filling both chambers and the throttled passage, and in which, in addition, the stud constitutes the head (2₁) of a suspension rod (2) itself disposed coaxially with the annular endpiece (1) and inside the bottom portion of said endpiece, the downwardly flared and preferably frustoconical annular wall (3) then returning upwards inside the bottom annular portion (12) of the working chamber, characterized in that at least the bottom of said bottom annular portion (12) of the working chamber (A) is provided with at least one flexible blade-like obstacle (13, 14, 18).

2. Hydraulic anti-vibration device according to claim 1, characterized in that the blade-like obstacle is constituted by a plurality of parallel blades (13) extending transversely in relation to the vertical axis (X) from the inner face of an annular block with which they form a common cylindrical ring (14) made of elastomer, ring whose outside shape is complementary to the shape of the lower annular portion (12), of the working chamber, in which it is received.

3. Hydraulic anti-vibration device according to claim 1, characterized in that the blade-like obstacle is constituted by a single annular lip (15) extending an elastomer cylindrical ring (16) inwardly.

4. Hydraulic anti-vibration device according to claim 1, characterized in that the blade-like obstacle is made up of a plurality of thin webs (18) extending parallel to the axis of the device and integrally molded with the annular wall (3).

5. Hydraulic anti-vibration device according to claim 4, characterized in that the thin webs extend along radial planes of the device.

6. Hydraulic antivibration device according to any one of the preceding claims, characterized in that the stud (2₁) is secured to a disk (20, 21) overhanging radially into the working chamber (A) and co-operating with the surrounding portion of the annular endpiece (1) to delimit another throttled passage (23) for the liquid.

7. Hydraulic anti-vibration device according to any one of claims 4 and 5 and to claim 6, characterized in that the periphery of the disk (20, 21) is notched radially by notches (22) surrounding the various thin webs (18) with clearance.
